# EUROPÄISCHE PATENTSCHRIFT

(11) **EP 2 451 326 B1**
(45) Veröffentlichungstag und Bekanntmachung des Hinweises auf die Patenterteilung: **03.04.2013**
(21) Anmeldenummer: 10734038.2
(22) Anmeldetag: 01.07.2010
(51) Int. Cl.: A47J 31/54

(54) **VORRICHTUNG ZUM HERSTELLEN VON GETRÄNKEN MITHILFE ELEKTROMAGNETISCHER STRAHLUNG**
DEVICE FOR PRODUCING BEVERAGES BY MEANS OF ELECTROMAGNETIC RADIATION
DISPOSITIF POUR PRÉPARER DES BOISSONS AU MOYEN D'UN RAYONNEMENT ÉLECTROMAGNÉTIQUE

(30) Priorität: 06.07.2009 DE 102009031758; 29.06.2010 DE 102010025397; 29.06.2010 DE 102010025399
(43) Veröffentlichungstag der Anmeldung: 16.05.2012
(60) Teilanmeldung: 13000167.0
(73) Patentinhaber: Meyl, Hendrik, 81379 München (DE)
(72) Erfinder: TEMPLIN, Frank, 81379 Munich (DE); SPLEISS, Bernd, 86438 Kissing (DE)
(86) Internationale Anmeldenummer: PCT/EP2010/003979
(87) Internationale Veröffentlichungsnummer: WO 2011/003543

(56) Entgegenhaltungen:
- WO-A1-99/25156
- US-A- 4 386 109
- US-A- 5 445 022
- US-A- 6 026 733

## Beschreibung

Die Erfindung betrifft Getränkebereiter zur Bereitung einer einzelnen Portion eines Getränks mithilfe elektromagnetischer Strahlung. Eine einzelne Getränkeportion ist die Menge, die für genau eine Person zum direkten Konsum zubereitet wird. Die üblicherweise verwendete Wellenlänge der elektromagnetischen Strahlung liegt im Zentimeterbereich (Mikrowellen).

Es gibt viele beliebte Getränke, die in ihrer Zubereitung meist die Extraktion eines Aromaträgers benötigen. Entsprechende Brauverfahren sind schon lange bekannt. Sie sind allerdings oft nur mit hohem Zeit und/oder Kapitaleinsatz realisierbar oder liefern ein Getränk von minderer oder gar schlechter Qualität.

Aufgrund der hohen Anforderungen, die die Herstellung eines Espressos erfordert, wird die Erfindung in der folgenden Beschreibung beispielhaft hieran erklärt. Der Fachman wird ohne Weiteres die Erfindung auf andere Getränkebereiter, wie z.B. einen Kaffee- oder Teebereiter, übertragen können.

Ein typischer Espresso hat ein Volumen zwischen 22,5 ml und 27,5 ml und entsteht durch eine 22,5 bis 27,5 Sekunden lange Extraktion aus 6,5 g bis 7,5 g gleichmäßig und fein gemahlenem Getränkegrundstoff aus stark gerösteten Kaffeebohnen (Espressoröstung) mit ca. 86° C bis 90° C heißer Brauflüssigkeit unter 800 kPa bis 1 MPa Druck. Die Getränketemperatur in dem Auffangbehälter beträgt idealerweise zwischen 64° C und 70° C.

Die Braukammer ist der Hohlraum des Getränkebereiters, in dem sich der zu extrahierende oder aufzulösende Getränkegrundstoff befindet.

Die europäische Norm EN 13248 beschreibt den üblichen Haushalts-Kaffeebereiter zur Verwendung auf dem Herd. Hierbei wird die Braukammer durch den Filtriertrichter und den Filter definiert. Wahlweise kann die Braukammer durch Verwendung eines Reduzierfilters durch den Gebraucher verkleinert werden. Die typische Dichtvorrichtung ist eine Gummidichtung in Form eines Ringes, der bei normalem Gebrauch auch den Filter am Auffangbehälter (auch Aufgussbehälter genannt) festklemmt, aber zur Reinigung herausnehmbar ist. Nachteile dieser Vorrichtung ist die recht aufwendig gründliche Reinigung oder das Entstehen von Ansatz bei einfacher Reinigung. Des Weiteren ist die Braukammer nur lose mit dem Getränkegrundstoff zu füllen. Hilfe beim Verdichten des Getränkegrundstoffes ist nicht gegeben, ebensowenig wie Hilfestellung zur sauberen Befüllung des Getränkebereiters.

Das amerikanische Patent US 4386109 (Bowen et al.) beschreibt einen Getränkebereiter für den Mikrowellenofen. Hierbei formt ein Druckbehälter den Braubehälter der mit der Filterkammer verschlossen wird, die einen hemmenden Weg zum Auffangbehälter gewährt. Hierdurch kann sich im Braubehälter ein vorgesehener Braudruck aufbauen. Der Braubehälter wird der Reihe nach mit Brauflüssigkeit befüllt, mit einem Filtereinsatz verschlossen, in den letzteren der Getränkegrundstoff eingefüllt und schließlich mit dem Filterverschluss druckdicht verschlossen.

Bowen et al. beschreiben ebenso die gewünschte Verdichtung des Getränkegrundstoffes, wodurch die Brauflüssigkeit gleichmäßig durch die Schicht des Getränkegrundstoffes geführt wird. Ebenso ist diese Verdichtung eine wichtige Voraussetzung zum Erlangen des gewünschten Braudruckes. Allerdings ist die hierbei beschriebene Erfindung schwierig durch den Gebraucher handzuhaben, z. B. kann der Getränkegrundstoff beim Befüllen leicht verschütten. Dies trifft insbesondere beim Bereiten von einfachen Espressi der italienischen Art zu, da hierfür der gesamte Bereiter sehr klein ist. Zusätzlich ist die Befüllung des Bereiters an strikte Abfolgen gebunden und eine Korrektur ohne Verschwendung von Grundstoffen nahezu unmöglich.

In dem kanadischen Patent CA 2054881 (Siccardi) ist ein Kaffeebereiter für die Verwendung unter Mikrowellenstrahlung beschrieben. Hierbei wird die Braukammer durch einen herausnehmbaren Topf mit perforiertem Boden der mit einem perforierten Deckel verschlossen ist, geformt. Zwischen dem Topf und Deckel ist ein separater Dichtring eingesetzt, um für Dichtung zu sorgen. Bei dieser Erfindung sind keinerlei Hilfsmittel zur Verdichtung des Getränkegrundstoffes enthalten, genausowenig wie Hilfsmittel gegen das Verschütten des Getränkegrundstoffes. Die vielen Dichtflächen im Zusammenhang mit einer großen zu dichtenden Fläche erschweren die sichere Verwendung hoher Drücke.

In der europäischen Patentanmeldung EP 1060701 (Converti) ist ein Getränkebereiter beschrieben, bei dem sich die Brauflüssigkeit in einem Behälter rund um die Braukammer befindet, und die Braukammer annähernd oder gänzlich die gesamte Brauflüssigkeit aufnehmen kann. Bei dieser Weise der Getränkebereitung besteht die Gefahr, dass der Getränkegrundstoff nicht optimal extrahiert bzw. aufgelöst wird. Dies trifft insbesondere bei Einzelportionen zu. Ebenfalls ist es mit dieser Vorrichtung nicht möglich, Braudrücke annähernd den für Espresso erforderlichen Druck zu erlangen, vorallem, da hier ein Verdichten des Getränkegrundstoffes völlig ausgeschlossen ist.

Das amerikanische Patent US 5281785 (Pasbrig) beschreibt einen Mikrowellen-Getränkebereiter, der ähnlich funktioniert wie der Haushalts-Kaffeebereiter zur Verwendung auf dem Herd. In einem Braubehälter wird die Braukammer durch einen trichterförmiger Filtereinsatz und einem Filterverschluss gebildet. In den Filtereinsatz wird ein mit Getränkegrundstoff befüllter herkömmlicher Papierfilter eingesetzt. Der Filterverschluss ist so geformt, dass er sich leicht auf den trichterförmigen Einsatz aufsetzen lässt. Er ist aber nicht zum ausreichenden Verdichten des Getränkegrundstoffes vorgesehen. Sollte die Braukammer so befüllt werden, dass das Verschließen der Braukammer auch eine Verdichtung des Getränkegrundstoffes hervorruft, so ist das Herausquillen des Getränkegrundstoffes aus dem Spalt zwischen dem trichterförmigen Einsatzes und dem Filterverschluss unvermeidbar.

Im amerikanischen Patent US 5884551 (Orrico et al.) wird ein Mikrowellen-Getränkebereiter beschrieben, bei dem Braubehälter, Braukammer und Auffangbehälter in einer Vorrichtung intregriert sind. Der Getränkebereiter wird umgedreht mit der Brauflüssigkeit und einer den Getränkegrundstoff enthaltenden Kartusche gefüllt, mit dem Boden des Bereiters verschlossen, zurückgedreht und im Mikrowellenofen das Getränk gebraut. Die Kartusche besteht aus einem topfförmigen Körper mit einem ersten Filter und einem daran befestigten, aufschwenkbaren Deckel. Zum Befüllen der Kartusche wird ihr Deckel aufgeschwenkt, sie mit dem Getränkegrundstoff gefüllt und die Kartusche wieder verschlossen. Durch die Verwendung der Kartusche ist die Befüllung des Getränkebereiters sauber. Ein Verdichten des Getränkegrundstoffes ist allerdings nicht möglich, und außerdem kann nur durch die Verwendung eines Gummiventils ein Überdruck von lediglich 34,47 kPa erreicht werden. Es ist ebenfalls anzumerken, dass der Verschlussdeckel des Braubehälters nicht abgedichtet wird bzw. eine besonders große zu dichtende Fläche aufweist.

In Patent US 4999466 (Waligorski) ist ein Mikrowellen-Kaffeebereiter dargestellt, bei dem sich unter einem torusförmigen Braubehälter eine Braukammer befindet. Diese schließt den Getränkebereiter allerdings nicht druckdicht ab. Auch bei Einsatz von dichtenden Vorrichtungen vermeidet die Art der Verbindung der Braukammer mit dem Braubehälter das Erreichen von für Espresso erforderliche Drücke. Ebenfalls ist auch hier der Verschluss des Filterbehälters nicht zum Verdichten des Getränkegrundstoffes vorgesehen, denn seine Form ist lediglich als leicht vertiefte Handhabungshilfestellung für den Gebraucher tauglich.

Ein wichtiger Aspekt bei der Verwendung von elektromagnetischer Strahlung zur Erwärmung ist die Abschirmung von nicht zu erhitzenden Teilen. So darf z. B. der Getränkegrundstoff nicht verbrennen und das fertige Getränk nicht weiter erhitzt werden und nicht kochen. Bestehende Methoden sind die Verwendung von solidem Metall (US 2601067, US 4386109) oder einer leitenden Beschichtung (US 2601067) um die entsprechenden Bereiche vor elektromagnetischer Strahlung abzuschirmen. Ebenfalls bekannt ist die Eigenschaft von elektromagnetischer Strahlung, sich durch Öffnungen, die eine bestimmte Größe unterschreiten, nicht fortpflanzen zu können.

Alle bekannten Ausführungen eines den Braubehälter mit der Filterkammer druckdicht verschließenden Getränkebereiters haben gemeinsam, dass die Braukammer erst im Bereiter selbst befüllt wird. Dies hat den besonderen Nachteil, dass beim Verschütten von Getränkegrundstoff der Getränkebereiter verschmutzt wird, was zur Verunreinigung des Getränkes führen kann.

Damit sich im Braubehälter ein angemessener Druck aufbauen kann, wird der Getränkegrundstoff vor dem Brauprozess verdichtet (getampert). Je stärker getampert wird, um so höher der erforderliche Braudruck, bzw. um so länger die Braudauer. Somit kann bei zu starker oder zu schwacher Tamperung das Brauergebnis erheblich vom Sollwert abweichen.

Beim Tampern durch Verschließen der Braukammer hängt die Verdichtung direkt von der Menge Getränkegrundstoff ab. Ist zu viel Getränkegrundstoff in der Braukammer, wird zu stark getampert, und ist zu wenig Getränkegrundstoff vorhanden, wird zu wenig getampert.

Weiterhin ist die Dosierung des Getränkegrundstoffs eine wichtige Prämisse für die Qualität des Getränkes. Beim Brauen von Kaffee, zum Beispiel, sollen Überdosierung, meist zu einem bitteren Getränk führend, als auch Unterdosierung, meist zu einem faden Getränk führend, vermieden werden.

Besonders kritisch wird die Dosierung in Brauverfahren, bei denen die Getränkegrundstoffmenge nicht allein Einfluss auf die vorhandene Menge an Aromastoffen hat, sondern auch den Brauprozess direkt beeinflusst. Dieser Einfluss kann sich z. B. auf die Braudauer, die Brautemperatur und auf den Braudruck erstrecken. Dementsprechend ist für solche Brauverfahren eine möglichst exakte Befüllung erstrebenswert.

Ein wichtiges Hilfsmittel im Befüllverfahren ist die Dosiervorrichtung. Dosiervorrichtungen nach Stand der Technik haben den Griff auf gleicher Höhe wie die Öffnung des Löffelhohlraumes. Hierdurch fällt die bemessene Menge beim Entleeren der Dosiervorrichtung unkontrolliert heraus. Es besteht die Gefahr, dass Getränkegrundstoff über den Rand des Filtereinsatzes hinausfällt, wodurch die Umgebung und die Dichtung verschmutzen.

Nebst losem Getränkegrundstoff wird bei Getränkebereitung zuweilen auch ein Pad oder eine Kapsel verwendet. Ein Pad (auch Pod genannt) ist eine vorportionierte Menge an Getränkegrundstoff für die Bereitung einer vordefinierten Menge eines Getränkes, die in einer flexiblen Verpackung erhältlich ist. Üblicherweise wird zur Verpackung Filterpapier verwendet. Wird eine starre Verpackung, wie z.B. Kunststoff oder Aluminium, werwendet, so wird dies üblicherweise als Kapsel bezeichnet.

Ebenfalls ist in allen bekannten Getränkebereitern das Design, also die ästhetische Anmutung des Getränkebereiters, von den technischen Vorrichtungen maßgebend bestimmt. Eine weitgehende Trennung von Design und technischen Vorrichtungen der Getränkebereiter ist bisher nicht ermöglicht worden.

Ein Ziel der Erfindung ist eine gute Abdichtung des Braubehälters, sodass der Getränkebereiter auch die zur Herstellung von Espresso erforderliche Braudrücke erreichen kann.

Ein weiteres Ziel der Erfindung ist, die Zahl der handzuhabenden Komponenten und die Zahl der sich zur Reinigung lösenden Komponenten (z. B. Gummidichtungen) zu minimieren.

Insbesondere ist ein Ziel der Erfindung, dass sich der Getränkebereiter einfach und sauber befüllen lässt, ebenso, dass der Getränkebereiter bei der Befüllung nicht unnötig verschmutzt.

Auch ist ein Ziel der Erfindung, eine einfache, saubere und sicher Handhabung des Getränkebereiters zu gewährleisten.

Ebenfalls ist ein Ziel der Erfindung, alle Oberflächen für eine schnellere und bessere Reinigung möglichst zugänglich zu halten.

Genauso ist ein Ziel der Erfindung, durch seine Konstruktionsweise dem Getränkebereiter eine freie Gestaltung der äußeren Anmutung zu erlauben.

Zusätzlich ist ein Ziel der Erfindung, dass er trotz unterschiedlicher Befüllung stets eine gleichwertige Brauqualität erreicht.

Schließlich ist ein Ziel der Erfindung, dass der Getränkebereiter kostengünstig, einfach und fehlerunanfällig hergestellt werden kann.

Die Erfindung findet Anwendung in Getränkebereitern, mit denen sich mithilfe elektromagnetischer Strahlung Getränke zubereiten lassen.

Insbesondere findet die Erfindung Verwendung in kleinen, tragbaren Systemen, die ausschließlich einzelne Getränkeportionen zubereiten.

Die Erfindung kann durchaus auch zur Bereitung von mehreren Portionen oder der Bereitung sonstiger Nahrungsmittel, bei deren Bereitung ein Brauprozess mittels heißer Flüssigkeit mit oder ohne Druck zugrunde liegt, verwendet werden.

Die Erfindung ist eine Verbesserung der Filtereinheit bei Getränkebereitern. Diese besteht aus Filtereinsatz und Filterverschluss, lässt sich gesamtheitlich auf den Braubehälter aufsetzen und abnehmen und sorgt gleichzeitig für eine gute Dichtung aller Komponenten. Die Braukammer kann zur verbesserten Handhabung außerhalb des Getränkebereiters befüllt und geschlossen werden, wobei die besonders große Tiefe des Filtereinsatzes eine signifikante Hilfestellung bietet. Das Verschließen der Braukammer durch den Filterverschluss verhindert durch einen in den Filtereinsatz greifenden Ring das Herausquillen des Getränkegrundstoffes und sorgt zusätzlich für seine angemessene Verdichtung. Durch das Weiten der Braukammer liefert der Getränke trotz unterschiedlicher Befüllung stets gleichwertige Getränkequalität.

Das Verfahren zur Befüllung der Braukammer eines Getränkebereiters mit dem Getränkegrundstoff kann aufgrund der neuartigen Filtereinheit geändert werden. Bei der Befüllung des Bereiters ist der Getränkegrundstoff bei Bewegung umschlossen und wird beim Wechsel der umschließenden Teilen abgestellt, sodass er nicht verschüttet werden kann. Das Verfahren enthält somit die folgenden Schritte:
(a) Befüllen der Dosiervorrichtung;
(b) Überstülpen des Filtereinsatzes über die befüllte Dosiervorrichtung;
(c) Gemeinsames Umdrehen von Filtereinsatz und Dosiervorrichtung;
(d) Absetzen des Filtereinsatzes auf einer flachen Ablage;
(e) Abnehmen der Dosiervorrichtung;
(f) Überstülpen des Filterverschlusses über den befüllten Filtereinsatz;
(g) Festdrücken des Filterverschlusses, sodass sich eine zusammenhängende Filtereinheit bildet;
(h) Aufsetzen der Filtereinheit auf den befüllten Braubehälter;
(i) Festdrehen, sodass die Braueinheit betriebsbereit ist;
(j) Umdrehen der Braueinheit;
(k) Aufsetzen der Braueinheit auf den Auffangbehälter.

Dieses Verfahren wird mit Hilfe von der erfindungsgemäßen Dosiervorrichtung durchgeführt.

Abbildungen 1 bis 26 zeigen verschiedene Ausführungen und Details der Erfindung:
**Abbildung 1** zeigt eine erste Ausführung der Erfindung,
**Abbildung 2** zeigt eine explodierte Darstellung der ersten Ausführung in Abbildung 1,
**Abbildung 3** zeigt den Filtereinsatzes der ersten Ausführung in Abbildung 1 (Schnitt B-B in Abbildung 4),
**Abbildung 4** zeigt eine Seitenansicht des Filtereinsatzes der ersten Ausführung in Abbildung 1 (Blickwinkel A-A in Abbildung 3),
**Abbildung 5** zeigt den Filterverschlusses der ersten Ausführung in Abbildung 1 (Schnitt **D-D** in Abbildung 6),
**Abbildung 6** zeigt die Draufsicht des Filterverschlusses der ersten Ausführung in Abbildung 1 (Blickwinkel C-C in Abbildung 5),
**Abbildung 7** zeigt eine zweite Variante der Gestaltung der Braukammer,
**Abbildung 8** zeigt eine dritte Variante der Gestaltung der Braukammer,
**Abbildung 9** zeigt eine zweite Ausführung der Erfindung,
**Abbildung 10** zeigt den Detailausschnitt E der zweiten Ausführung der Erfindung.
**Abbildung 11** zeigt einen erfindungsgemäßen Filterverschluss.
**Abbildung 12** zeigt den erfindungsgemäßen Filterverschluss bei überfüllter Braukammer.
**Abbildung 13** zeigt einen erfindungsgemäßen Filtereinsatz.
**Abbildung 14** zeigt den Querschnitt der erfindungsgemäßen Dosiervorrichtung.
**Abbildung 15** zeigt eine Seitenansicht der Dosiervorrichtung.
**Abbildung 16** zeigt Schritt (a) des erfindungsgemäßen Verfahrens.
**Abbildung 17** zeigt Schritt (b) des erfindungsgemäßen Verfahrens.
**Abbildung 18** zeigt Schritt (d) des erfindungsgemäßen Verfahrens.
**Abbildung 19** zeigt Schritt (e) des erfindungsgemäßen Verfahrens.
**Abbildung 20** zeigt Schritt (f) des erfindungsgemäßen Verfahrens.
**Abbildung 21** zeigt Schritt (g) des erfindungsgemäßen Verfahrens.
**Abbildung 22** zeigt Schritt (h) des erfindungsgemäßen Verfahrens.
**Abbildung 23** zeigt Schritt (i) des erfindungsgemäßen Verfahrens.
**Abbildung 24** zeigt Schritt (k) des erfindungsgemäßen Verfahrens.
**Abbildung 25** zeigt Schritt (l) einer Variante des erfindungsgemäßen Verfahrens.
**Abbildung 26** zeigt Schritt (m) einer Variante des erfindungsgemäßen Verfahrens.

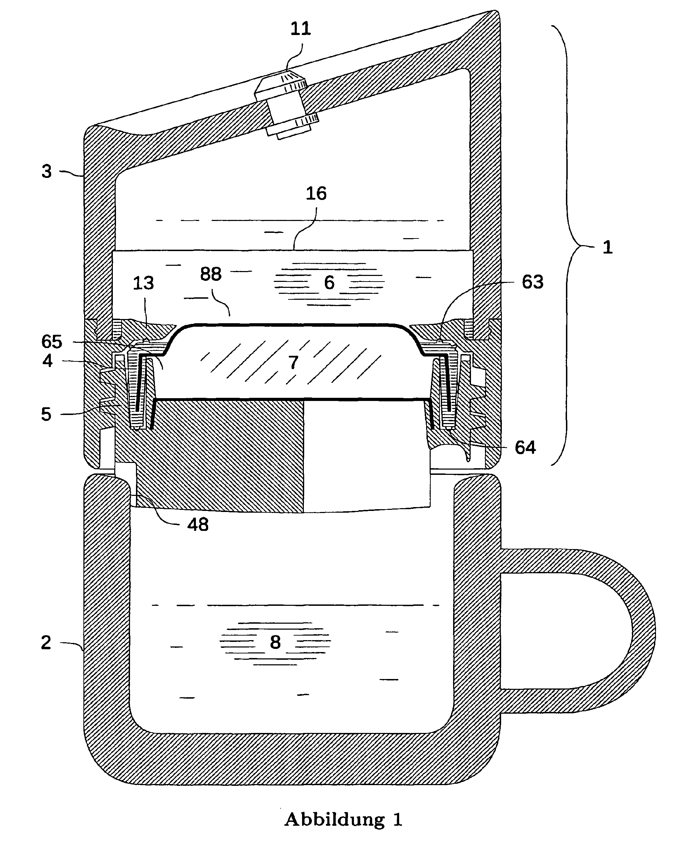

Die in Abbildung 1 dargestellte erste Ausführung der Erfindung besteht aus einer Braueinheit (1) und einem Auffangbehälter (2). Die Braueinheit (1) setzt sich aus Braubehälter (3) und Filtereinheit (88) zusammen. Die Filtereinheit (88) wiederum besteht aus Filtereinsatz (4) und Filterverschluss (5).

Die Filtereinheit (88) umschließt und definiert die Braukammer (65), die mit dem Getränkegrundstoff (7) befüllt ist. Die Brauflüssigkeit (6) befindet sich im Braubehälter (3) und das fertige Getränk (8) sammelt sich im Auffangbehälter (2).

Die Verbindung aller Teile der Braueinheit (1) geschieht durch den Filterverschluss (5), der mit dem Braubehälter (3) eine lösbare Verbindung eingeht und mit dem der Filtereinsatz (4) gegen den ringförmigen Flansch (13) des Braubehälters (3) gedrückt wird.

Der Filterverschluss (5) geht mit dem Auffangbehälter (2) ebenfalls eine lösbare Verbindung (48) ein und sorgt so für Verbindung zwischen Braueinheit (1) und Auffangbehälter (2). Diese ist vorzugsweise eine Steckverbindung und stellt sicher, dass beim Hereinstellen in und Herausnehmen aus dem Mikrowellenofen und beim Transport der Getränkebereiter zusammenhält. Die Verbindung (48) gewährleistet außerdem, dass sich Dämpfe, die vom fertigen Getränk (8) aufsteigen, verflüchtigen können und somit keinen Druck im Auffangbehälter (2) aufbauen können.

Der Braubehälter (3) bildet zusammen mit der Filtereinheit (88) einen Druckbehälter in dem sich der für den Brauprozess nötige Druck aufbauen kann. Die Dichtstelle (63) zwischen Filtereinsatz (4) und Braubehälter (3) und die Dichtstelle (64) zwischen Filtereinsatz (4) und Filterverschluss (5) sorgen für die druckdichte Verbindung. Zur Sicherheit ist Braubehälter (3) mit einem Sicherheitsmechanismus (11) versehen, der den Druck im Braubehälter unterhalb des Sicherheitsdruckes hält.

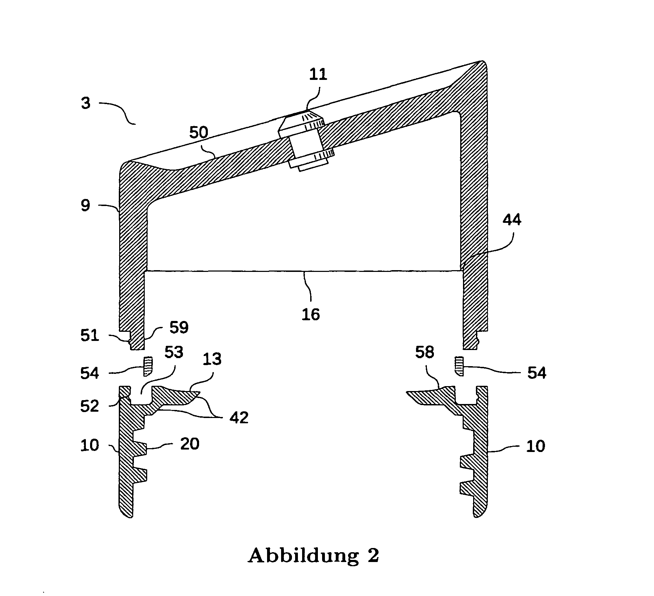

Wie in Abbildung 2 dargestellt, besteht der Braubehälter (3) aus Flüssigkeitsbehälter (9), Filterauffang (10) und Sicherheitsmechanismus (11). Der Braubehälter ist über eine Öffnung einfach zugänglich und somit einfach zu reinigen und zu befüllen. In dem Flüssigkeitsbehälter ist eine Kennlinie (16) angebracht, bis wohin die Brauflüssigkeit (6) bei normalem Gebrauch befüllt wird. Der Boden (50) des Braubehälters ist wahlweise gerade oder, wie dargestellt, schräg. Tatsächlich kann der Braubehälter verschiedenste Formen annehmen, ohne vom Geist der Erfindung abzuweichen.

Der Flüssigkeitsbehälter (9) ist vollständig aus transparentem Material gefertigt. Hierdurch ist beim Befüllen des Flüssigkeitsbehälters (3) sowohl der Wasserstand (6) als auch die angebrachte Kennlinie (16) von innen und außen sichtbar. Die Kennlinie (16) wird durch einen kleinen Vorsprung (44) im Flüssigkeitsbehälter (9) gebildet und ist somit unauslöschlich. Sie kann auch anderweitig angebracht sein, z. B. durch Aufdruck, Rille oder Ring.

Der Filterauffang (10) enthält den Halteflansch (13), der auf der Seite zum Flüssigkeitsbehälter durch die Formung (58) dafür Sorge trägt, dass die Brauflüssigkeit (6) gesamtheitlich den Weg zur Filtereinheit (88) findet. Ebenso kann der Filterauffang (10) die Abschrägungen (42) enthalten, durch die der Filtereinsatz (4) beim Einsetzen zentriert wird. Zuletzt enthält er auch den Verschlussmechanismus (20) des Braubehälters (3) zur Filtereinheit (88).

Der Filterauffang (10) ist mit dem Flüssigkeitsbehälter (9) permanent verbunden. Diese Verbindung kann auf verschiedenste Weise zustande kommen, z. B. Kleben, Schweißen, Stecken oder Klemmen. Die hier ausgeführte Verbindung besteht aus einem Flansch (59) am Flüssigkeitsbehälter (9), der sich in Nut (53) im Filterauffang (10) einfügt und mit einem Keilring (54) festgeklemmt ist. Zum besseren Halt kann die Verbindung zusätzlich mit Nasen oder einem Ring (51) am Flansch (59) versehen werden, die oder der in der Einkerbung (52) der Nut (53) einrasten bzw. einrastet.

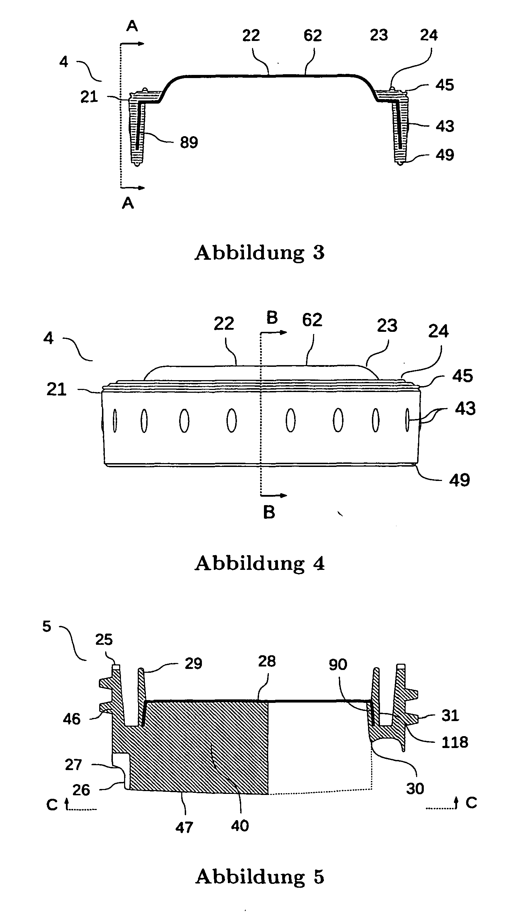

Der in Abbildungen 3 und 4 detailliert dargestellte Filtereinsatz (4) besteht aus einem tragenden Ring (21) in den eine erste Filtriervorrichtung (22) eingesetzt ist. Die Filtriervorrichtung (22) besteht aus einem mit Sieblöchern (62) perforierten Metallblech (89). Das Metallblech (89) ist topfförmig ausgebildet und setzt sich im tragenden Ring (21) fort. Die Rundung (23) ist so geformt, dass sich der Filter (22) schlüssig an ein handelsübliches Pad (12) anschmiegt.

Der Filtereinsatz (4) enthält alle Dichtelemente des Getränkebereiters (1). Dichtstelle (63) wird durch Dichtung (24) und Dichtstelle (64) wird durch Dichtung (49) realisiert (siehe auch Abbildung 1). Diese Dichtungen können aus separaten oder angespritzten O-Ringen bestehen. Ist der tragende Ring (21) gesamtheitlich aus einem elastischen Material gefertigt, sind sie Teil des tragenden Rings (21). Durch die konsequenterweise wenige Hinterschnitte und Spalten ist die Säuberung des Bereiteres einfach und der Bereiter in einem hygienisch einwandfreien Zustand zu halten. Ebenfalls entfallen die Montage von Einzelteilen und die Notwendigkeit komplexer Herstellungsverfahren. Der Getränkebereiter ist einfach und kostengünstig herstellbar.

Der Filtereinsatz (4) verbindet sich mit dem Filterverschluss (5) lösbar über die außen am Filtereinsatz (4) angebrachten Noppen (43), die gegen die Innenseite des Filterverschlusses drücken. Die Griffkante (45) vereinfacht das Loslösen von Filtereinsatz (4) und Filterverschluss (5).

Damit bei der Befüllung des Filtereinsatzes (4) möglichst wenig Getränkegrundstoff (7) verschüttet wird, ist dieser tiefer als die geschlossene Braukammer (65).

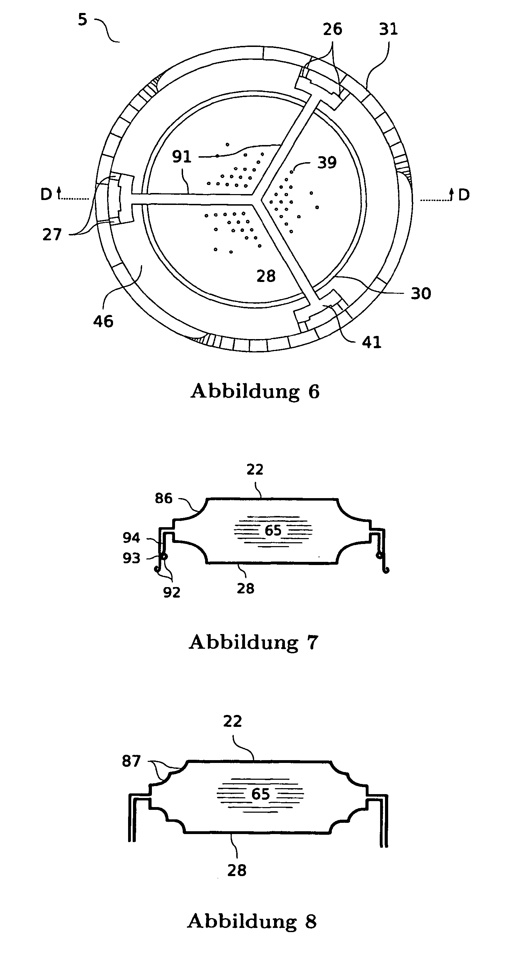

Abbildungen 5 und 6 zeigen den Filterverschluss (5). Dieser besteht aus einem tragenden Ring (46), der einen in den Filtereinsatz (4) greifenden zylindrischen Fortsatz (118) enthält. Dieser zylindrische Fortsatz (118) ist mit einer zweiten Filtriervorrichtung (28) verschlossen. Die Filtriervorrichtung (28) besteht aus einem mit Sieblöchern (39) perforierten Metallblech (90). Das Metallblech (90) ist topfförmig ausgebildet und setzt sich im tragenden Ring (46) fort. Analog zum Metallblech (89) im Filtereinsatz (4) kann das Metallblech (90) mit einer Rundung ausgebildet sein, die sich einem handelsüblichen Pad (12) schlüssig anschmiegt.

Der tragende Ring (46) ist mit einem Verschlussmechanismus (31) versehen, vorzugsweise ein dreigängiges Gewinde, welcher sich mit Verschlussmechanismus (20) des Filterauffangs (10) des Flüssigkeitsbehälters (3) verbindet. Der Verschlussweg des Gewindes beträgt zur einfachen Handhabung 45° bis 180°, idealerweise 150°. Andere Arten der Verbindung sind ebenfalls möglich, z. B. Bajonettverschluss oder eine andere Gewindeart. Diese Verbindung sorgt auch für das Verdichten des Getränkegrundstoffes (7). Ferner ist ein Öffnen der Braueinheit (1) durch eine zufällige, unbeabsichtigte Betätigung des Verschlusssystems nicht möglich.

Damit beim Schließen der Filterkammer (65), d. h. beim Zusammenfügen von Filtereinsatz (4) und Filterverschluss (5), kein Getränkegrundstoff (7) aufgrund des Verdichtens aus dem Spalt zwischen Filtereinsatz (4) und Filterverschluss (5) herausquillt, ist der Filterverschluss (5) mit dem in die Braukammer hineinragenden Ring (29) versehen. Dieser verschließt die Braukammer (65), bevor das Verdichten beginnt.

Der Filterverschlusses (5) enthält den Griff (40), mit dem sich die Filtereinheit (88) handhaben und verschließen lässt. Bei dieser Ausführung ist der Griff (40) aus drei lamellenartig ausgebildeten Speichen (91) innerhalb des tragenden Rings (46) geformt. Andere Verschlussmechanismen des Filterverschlusses (5) erfordern gegebenenfalls eine andere Auslegung des Griffes (40).

Zur Lockerung und Entfernen von Getränkegrundstoff (7), welcher ungewünscht in den Verschlussspalt zwischen Filtereinsatz (4) und Filterauffang (10) geraten kann, ist an der dem Filterauffang (10) zugewandten Seite des Filterverschlusses (5) ein Sägezahnmuster (25) eingearbeitet.

Die lösbare, aber nicht selbstlösende Verbindung (48) zwischen Braueinheit (1) und Auffangbehälter (2) wird durch die Stecklippen (26) des Filterverschlusses (5) bewirkt (siehe auch Abbildung 1). Diese sind jeweilig am Ende der Querträger (41) ausgebildet, die die Enden drei lamellenartig ausgebildeten Speichen (91) des Griffes (40) formen. Hierbei sorgen die Abstandshalter (27) für genügend Abstand zum Auffangbehälter (2) sodass sichergestellt ist, dass sich kein Druck im Auffangbehälter (2) aufbauen kann. Damit das Getränk (8) nach Verlassen der Braukammer (65) sauber in den Auffangbehälter (2) tropft, kann eine Abtropfkante (30) vorgesehen werden.

Zur Vorbereitung des Brauprozesses wird die Vorrichtung in seine Komponenten Braubehälter (3), Filtereinsatz (4), Filterverschluss (5) und Auffangbehälter (2) zerlegt. Der Braubehälter (3) wird bis zur Kennzeichnung (16) mit der Brauflüssigkeit (6) befüllt und bereitgestellt. Der Filtereinsatz (4) wird mit dem gewünschten Getränkegrundstoff (7) befüllt. Zur Befüllung des Filtereinsatzes (4) kann auch ein sogenanntes Pad (12) oder eine Kapsel verwendet werden. Danach wird der Filterverschluss (5) mit dem Filtereinsatz (4) verbunden, sodass beide zusammenhalten und die Filtereinheit (88) bilden, mit der der Braubehälter (3) druckdicht verschlossen wird. Die so vorbereitete Braueinheit (1) wird umgedreht und mit der Filterseite nach unten auf den Auffangbehälter (2) gesteckt.

Um die Brauflüssigkeit (6) zu erwärmen, wird der so vorbereitete Getränkebereiter geeigneter elektromagnetischer Strahlung ausgesetzt, z. B. mittels eines handelsüblichen Mikrowellenofens. Während des Brauprozesses lässt sich der Zustand über eine Flüssigkeitsstandanzeige im Braubehälter (3) beobachten. Durch den entstehenden Druck im Braubehälter (3) wird die Brauflüssigkeit durch den Getränkegrundstoff (7) gepresst und das Getränk (8) gebraut. Der sich während des Brauvorgangs im Braubehälter (3) entwickelnde Überdruck liegt im Bereich zwischen 0 Pa und 2 MPa. Hierbei ist zu beachten, dass zum Erreichen eines gleichmäßigen Braudruckes, d. h. der Druck bei dem ein signifikanter Fluss Brauflüssigkeit durch den Getränkegrundstoff herrscht, und für Braudrücke über 300 kPa eine druck- und flussregulierende Vorrichtung notwendig ist.

Nach Beenden des Brauprozesses wird der Getränkebereiter aus der Mikrowelle herausgenommen, die Braueinheit (1) vom Auffangbehälter (2) entfernt und zur Seite gestellt. Das Getränk wird direkt aus dem Auffangbehälter (2) konsumiert.

Ein wichtiger Faktor für die Durchlaufszeit, -druck und -temperatur ist das Verdichten des Getränkegrundstoffes (7). Diese Funktion wird durch das Verschließen der Filterkammer (65) durchgeführt. Der Filtereinsatz (4) ist tiefer als die tatsächliche Höhe des Pads (12) oder des verdichteten Getränkegrundstoffes (7). Dadurch wird das Befüllen mit losem Getränkegrundstoff (7) in ausreichender Menge ermöglicht und das Verschütten des Getränkegrundstoffes (7) vermieden, besonders beim Aufsetzen des Filterververschlusses (5).

Besonders wichtig ist die Möglichkeit zur Beobachtung des Brauprozesses durch den Gebraucher des Getränkebereiters. Aufgrund des transparenten Flüssigkeitsbehälters (9) kann jederzeit der Betriebszustand des Getränkebereiters festgestellt werden, zumal jeder haushaltsübliche Mikrowellenofen ein großes Sichtfenster besitzt. Hierdurch wird die Bedienungssicherheit immens erhöht, da der Mikrowellenofen mit dem kompletten Durchlaufen der Brauflüssigkeit (6) direkt auszuschalten ist. Eine andere Möglichkeit zur Beobachtung des Brauprozesses können Sichtfenster im Braubehälter (3) sein, sollte dieser im allgemeinen aus opakem Material beschaffen sein. Auch sind Sichtfenster im Auffangbehälter (2) oder ein gesamtheitlich transparenter Auffangbehälter (2) möglich. Eine weitere Möglichkeit ist die Verwendung eines von außen sichtbaren Schwimmers.

Fehlbedienungen des Bereiters sind deutlich zu erkennen und somit für den Gebraucher offensichtlich. Beispiele hierfür sind die schräge Oberseite (50) der Braueinheit (1), die impliziert das dies nicht die vorgesehene, stabile Stellfläche ist, sowie die Rundung (47) des Griffes (40) des Filterverschlusses (4), die bewirkt, dass die Braueinheit (1) nicht stabil steht, wenn sie nicht auf den Auffangbehälter (2) gesteckt ist.

Die Konstruktion des Filterverschlusses (5) ist so gewählt, dass bei mangenider Funktion der Dichtverbindungen (24), z. B. durch ungenügende Schließung des Filterverschlusses (5), keine Brauflüssigkeit (6) am Getränkebereiter nach außen dringt, sondern kontrolliert in den Auffangbehälter (2) laufen kann. Hierdurch werden der Mikrowellenofen und der Getränkebereiter nicht verschmutzt und bleiben sauber.

Die Konstruktionsweise des Filtereinheit (88) gewährleistet, dass keinerlei Entladungen (Lichtbögen) stattfinden können, sei es zwischen den Metallteilen (89, 90) untereinander oder zwischen den Metallteilen (89, 90) und Teilen des Mikrowellenofens. Ebenso sind die Metallteile (89, 90) so konstruiert, dass zwecklose Aufwärmungen vermieden werden.

Die Materialwahl der Filtriervorrichtungen (22, 28) wurde aufgrund der Notwendigkeit der Abschirmung des Getränkegrundstoffes (7) vor der elektromagnetischen Strahlung getroffen, kann aber durchaus bei anderen Ausführungen der Erfindung überflüssig sein, sodass auch andere Filtriervorrichtungen (22, 28) Verwendung finden können, ohne vom Geist der Erfindung abzuweichen. So kann zum Beispiel die Abschirmung auch weiträumiger gestaltet sein: Wenn der Auffangbehälter (2) ebenfalls eine Abschirmung der elektromagnetischen Strahlung bietet, können Metallblech (89) und der Auffangbehälter (2) gemeinsam sowohl den Getränkegrundstoff (7) als auch das fertige Getränk (8) abschirmen. Hierdurch ist es durchaus möglich, dass im Filterverschluss (5) keine abschirmende Wirkung benötigt wird und nur der Filtereinsatz (4) Komponenten aus Metall oder aus einem anderen abschirmenden Material besitzt.

Die Werkstoffe, die in Kontakt mit Brauflüssigkeit (6), Getränkegrundstoff (7) und dem Aufguss (8) kommen, sind so gewählt, dass sie lebensmittelecht sind und die organoleptischen Eigenschaften des Getränkes (8) nicht beeinträchtigen. Der gesamte Getränkebereiter ist spülmaschinentauglich konstruiert und alle Materialien sind spülmaschinengeeignet. Der Getränkebereiter ist tragbar und robust, sodass er bedenkenlos zur täglichen Arbeit und auf Reisen mitgenommen werden kann.

In den Abbildungen 7 und 8 sind Variationen zu der Braukammer (65) dargestellt. Um die Aufnahme eines Pads (12) zu verbessern, ist eine Verjüngung der Braukammer (65) in Richtung ihres Randes vorgesehen, sodass die Brauflüssigkeit (6) vorwiegend mitten durch das Pad (12) fließt. Diese Verjüngung folgt einem bestimmten Profil (86, 87), welches nicht der normalen Form eines handelsüblichen Pads entspricht. Ebenfalls ist zu beachten, dass das Pad (12) zwischen den Filtriervorrichtungen (22, 28) eingeklemmt ist, sodass die Brauflüssigkeit (6) gezwungen ist mittig durch das Pad (12) zu fließen anstatt außen entlang. Das Profil (87) sorgt zusätzlich dafür, dass das Papier des Pads (12) weniger oder keine Falten wirft, da es durch die größere Oberfläche der Filterkammer (65) mehr gestrafft wird.

Abbildung 7 zeigt zusätzlich eine Möglichkeit, die Abschirmung zu verbessern und gleichzeitig die Verbindung von Filtereinsatz (4) und Filterverschluss (5) herzustellen. Dies geschieht dadurch, dass mindestens einer der beiden Teile (89, 90) der Filtereinheit (88) mit gefederten Steckelementen (94) aus Metall ausgebildet ist und so beide Teile (89, 90) miteinander einen Schleifkontakt (93) bilden, der sowohl den elektrischen als auch mechanischen Kontakt zwischen Filtereinsatz (4) und Filterverschluss (5) sicherstellt. Ebenfalls weisen die Metallteile an Ihren Kanten eine Rundung (92) auf, die z. B. durch Umschlagen des Bleches geformt sein kann. Diese Rundung (92) reduziert die elektrischen Felder und vermeidet so Bildung von Koronaverlusten und Lichtbögen.

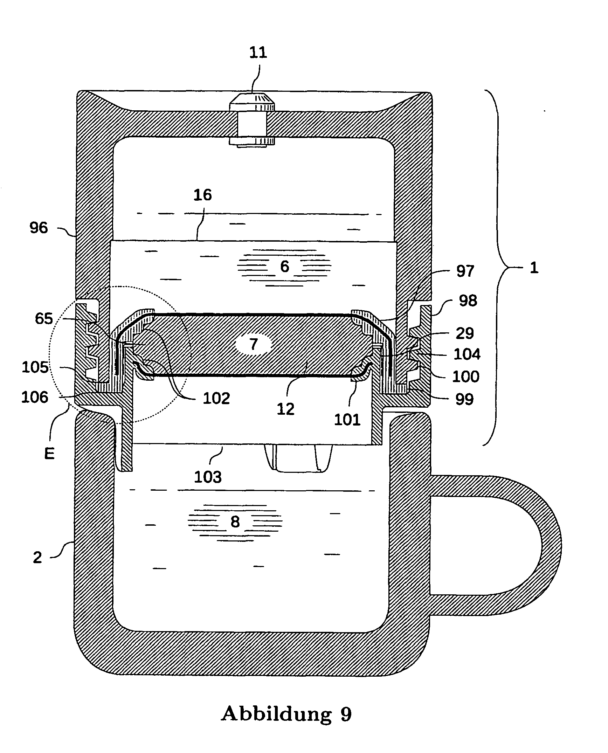

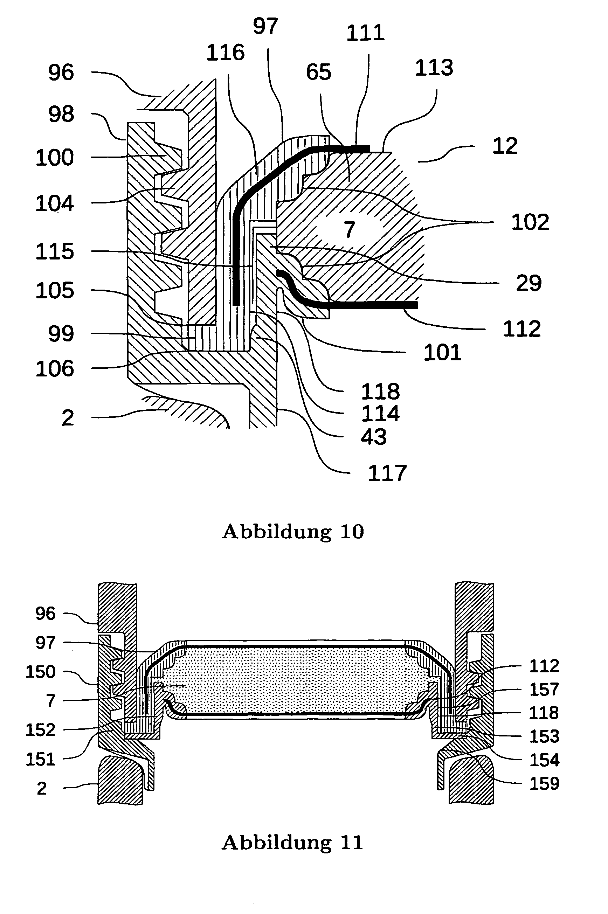

Eine zweite Ausführung der Erfindung zeigen Abbildungen 9 und 10, mit einer Braueinheit (1) aus Braubehälter (96) und Filtereinheit (103) und einem Auffangbehälter (2). Der Braubehälter (96) besteht aus einem vorwiegend zylindrischen Körper der auf einer Seite geschlossen und auf der anderen Seite offen ist. Die Öffnung wird durch die Filtereinheit (103), bestehend aus Filtereinsatz (97) und Filterverschluss (98), verschlossen. Die Verbindung von Braubehälter (96) und Filtereinheit (103) geschieht durch die Verschlussmechanismen (100) des Braubehälters (96) und (104) des Filterverschlusses (98). Beide Verschlussmechanismen (100, 104) kooperieren zusammen und sind vorzugsweise Gewinde.

Der Filtereinsatz (97) ist so konstruiert, dass er sowohl losen Getränkegrundstoff (7) oder ein Pad (12) aufnehmen kann. Zur Verwendung eines Pads (12) sind der Ring (29) und die Seitendwand (114) des Filtereinsatzes (97) so ausgeführt, dass genügend Raum für den meistens bei Pads (12) überstehenden Papierrand vorhanden ist.

Die Filtereinheit (103) kann als Ganzes eingesetzt und herausgenommen werden. Die Verbindung von Filtereinsatz (97) und Filterverschluss (98) ist, beispielsweise, durch Noppen bzw. vorstehende Nasen (43) auf der Außenseite des Ringflansches (29) am Filterverschluss (98) hergestellt. Diese klemmen den Filtereinsatz (97) am Filterverschluss (98) bei deren Zusammenfügung lösbar aneinander fest.

Der Filtereinsatz (97) besitzt einen Flansch (99), mit dem er auf dem Rand des Braubehälters (96) aufliegt. Dieser Flansch (99) beherbergt dichtende Verbindungen (105) zwischen Braubehälter (96) und Filtereinsatz (97) und (106) zwischen Filtereinsatz (97) und Filterverschluss (98). Diese Dichtungen (105, 106) können aus separate oder angespritzte O-Ringe bestehen, vorzugsweise sind sie aber Teil des Flansches (99). Der Filtereinsatz (97) wird dann gesamtheitlich aus einem elastischen Material gefertigt.

Die Braukammer (65) ist bei dieser Ausführung mit einer Verjüngung (102) versehen, die dem Profil (87) in Abbildung 8 gleicht, allerdings ist es hier Teil der tragenden Ringe (116, 117) von Filtereinsatz (97) und Filterverschluss (98). Dies verdeutlicht, dass die in den Abbildungen 7 und 8 gezeigten Profile der Braukammerverjüngung (102) nicht notwendigerweise durch Metallteile geformt sind, sondern als Teile der tragenden Ringe gestaltet sein können. Die Filtervorrichtungen und Abschirmungen (111, 112) von Filtereinsatz (97) und Filterverschluss (98) sind dementsprechend einfach geformt und kostengünstig herstellbar.

Die Abtropfkante (101) ist durch die Verjüngung (102) der Braukammer (65) einfach und materialsparend zu gestalten.

In Abbildung 11 ist eine dritte Ausführung des Filterverschlusses (150) dargestellt. Er besteht aus einem tragenden Ring (151) aus einem starren, stabilen Material, in dem der Einsatz (152) permanent eingesetzt ist. Der Einsatz (152) besteht aus einem Zylinder (157), der auf einer Seite mit dem Filter (112) verschlossen ist und auf der anderen Seite nach außen hin Flansch (154) aufweist. Der Flansch (154) ist permanent mit dem tragenden Ring (151) verbunden. Der Einsatz (152) ist gesamtheitlich aus einem elastischen Material gefertigt.

Kurz überhalb des Flansches (154) ist der Zylinder (157) mit einer Verformungszone (153) ausgestattet. Hier hat der Zylinder (118) eine dünnere Wandstärke, wodurch der Zug auf den Flansch durch das Nachgeben dieser Verformungszone (153) in akzeptablen Grenzen bleibt.

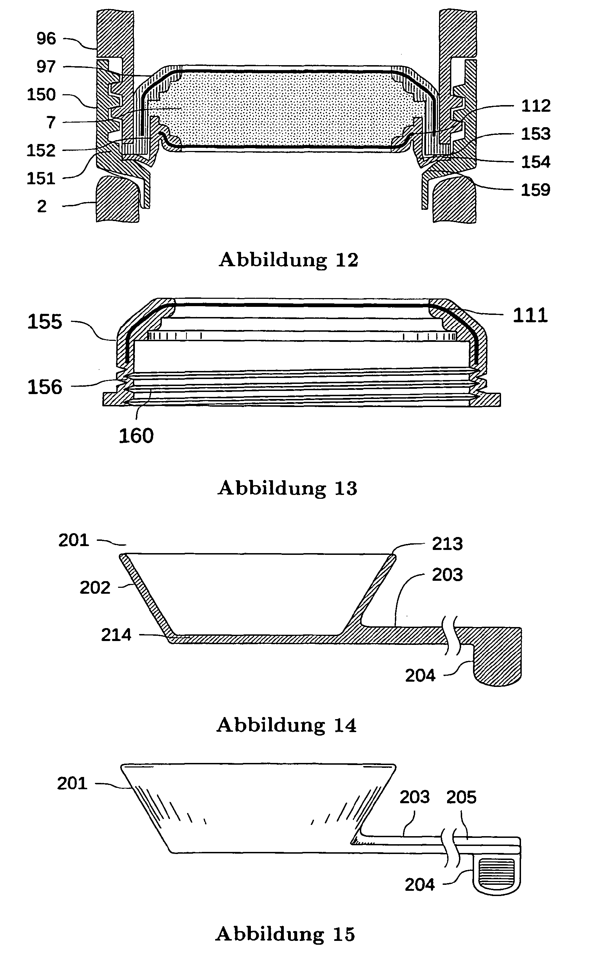

Abbildung 12 zeigt den Filterverschlus (150) bei mit Getränkegrundstoff (7) stark befüllter Braukammer. In einem solchen Fall verbiegen sich die Verformungszone (153) und Flansch (154), sodass der Filter (112) im Verschluss (150) sich nach unten verschieben kann und die Braukammer größer wird. Um ein übermäßiges verbiegen des Einsatzes (152) zu vermeiden, ist Anschlag (159) im tragenden Ring (151) das Ende der Bewegung.

Sind die Braudrücke während des Brauprozesses derart hoch, dass der Filter aufgrund des beschriebenen Federmechanismusses hierdurch ungewollt verschiebt, so kann der Federmechanismus zum Weiten der Braukammer (65) in den Filtereinsatz (97) aufgenommen werden.

Abbildung 13 zeigt ein Beispiel, wie der der Filtereinsatz (97) mit Federmechanismus kostengünstig ausgeführt sein kann. Der aus einem elastischen Material gefertigte Filtereinsatz (155) hat Streckrippen (156), die wie ein Gewinde ausgeführt sind. Hierdurch können die Hinterschnitte (160) an der Innenseite bei der Herstellung durch Entspindelung der Gussform entformt werden. Die entsprechenden Einkerbungen an der Außenseite sind herstellungstechnisch unbedenklich.

Wird der Filtereinsatz (155) stark befüllt, so dehnen sich beim Verschließen des Getränkebereiters (1) die Hinterschnitte (160) auf und gewähren dem Getränkegrundstoff (7) mehr Raum.

Die Vorrichtung zum Befüllen der Braukammer (65) ist in Abbildungen 14 und 15 dargestellt. Sie wird kurz als Dosiervorrichtung (201) bezeichnet.

Dosiervorrichtung (201) besteht aus einem Hohlkörper (202), an dessen Boden (214) ein Stiel (203) befestigt ist. Der Rand des Hohlkörpers (202) ist zumindest an dessen Kante (213) genau der Form des Filtereinsatzes (97) oder des jeweils zu befüllenden Gefäßes angepasst. Der Rand verjüngt in Richtung des Bodens (214) des Hohlkörpers (202). Bei einem runden zu befüllenden Gefäß ergibt sich somit z.B. ein kegelstupfförmiger Hohlraum.

Am Ende des Stiels (203) befindet sich der Griff (204) der entgegengesetzt der Öffnung des Hohlkörpers (202) orientiert ist. Hierdurch ist der Griff (204) während des Verfahrens einfach greifbar. Der Stiel (203) ist der länge nach mit einem Stabilitätssteg (205) versehen.

Anstelle den Griff (204) am Stiel (203) anzubringen kann dieser auch direkt am Boden (214) des Hohlkörpers (202) angebracht werden. Es kann dann auch auf den Stiel (203) verzichtet werden.

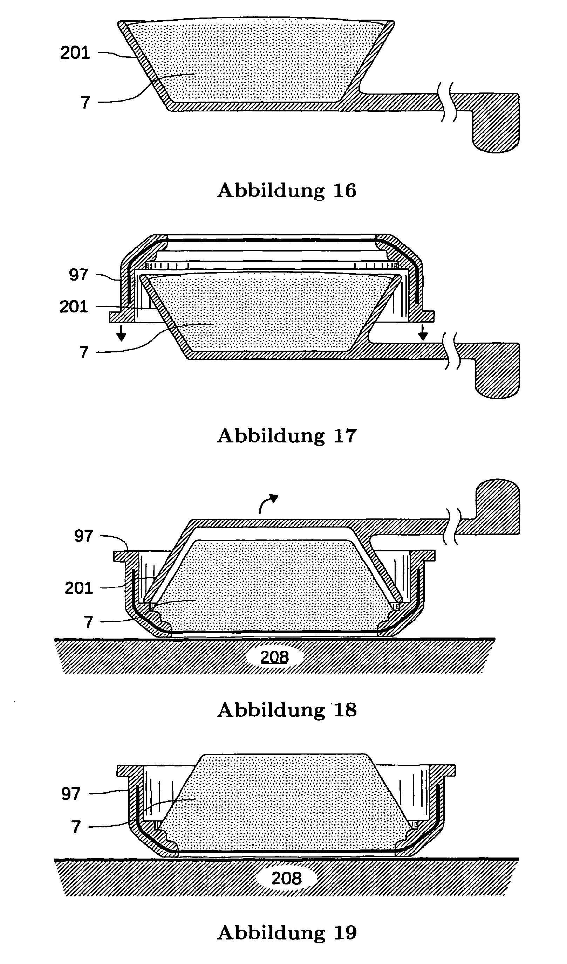

Die Abbildungen 16 bis 24 zeigt die einzelnen Verfahrensschritte der Erfindung.

### (a) Befüllen der Dosiervorrichtung (201) (Abbildung 16)

Mit der Dosiervorrichtung (201) wird ein bestimmtes Volumen Getränkegrundstoff (7) aus einem Vorratsbehälter geschöpft.

### (b) Überstülpen des Filtereinsatzes (97) über der befüllten Dosiervorrichtung (201) (Abbildung 17)

Der Filtereinsatz (97) wird mit der Öffnung nach unten über die Dosiervorrichtung (201) gestülpt. Bei einer anderen Ausführung eines Getränkebereiters wird anstelle des Filtereinsatzes (97) ein ensprechend anderes Teil oder der gesamte Bereiter mit dem Getränkegrundstoff (7) befüllt und somit dieser hier über die Dosiervorrichtung (201) gestülpt.

### (c) Gemeinsames Umdrehen von Filtereinsatz (97) und Dosiervorrichtung (201)

Die durch die Dosiervorrichtung (201) und Filtereinsatzes (97) begrenzte Kammer kann sicher ohne Verschütten des Getränkegrundstoffes (7) umgedreht werden.

### (d) Absetzen des Filtereinsatzes (97) auf einer flachen Ablage (208)(Abbildung 18)

Das Abstellen auf einer flachen Ablage (208) dient dazu, um ein Verschütten des Getränkegrundstoffes (7) beim folgenden Auswechsel der Dosiervorrichtung (201) mit dem Filterverschluss (98) zu vermeiden.

### (e) Abnehmen der Dosiervorrichtung (201) (Abbildung 19)

Beim Abnehmen der Dosiervorrichtung (201) behält der Getränkegrundstoff (7) die Form der Dosiervorrichtung (201) weitgehend bei. Durch die Formgebung kann der Getränkegrundstoff (7) steilere Seiten erreichen, als wenn er lose aufgeschüttet wird. Aufgrund der Auflage auf der flachen Ablage (208) wird der Einsturz der Seiten vermieden.

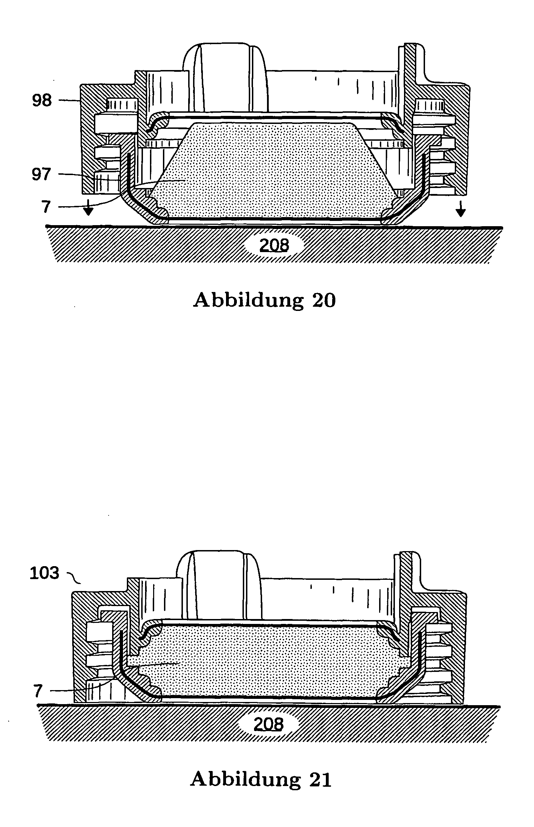

### (f) Überstülpen des Filterverschlusses (98) über den befüllten Filtereinsatz (97) (Abbildung 20)

Der Filterverschluss (98) wird über den Filtereinsatz (97) gestülpt. Hierbei greift der Ring (29) des Filterverschlusses (98) zuerst in den Rand des Filtereinsatzes (97), um zu verhindern, dass der durch das Verschließen zu den Seiten gedrückte Getränkegrundstoff (7) aus der Braukammer (29) herausquillt.

### (g) Festdrücken des Filterverschlusses (98), sodass sich eine zusammenhängende Filtereinheit (103) bildet (Abbildung 21)

Beim Festdrücken des Filterverschlusses (98) greift eine Haltevorrichtung, die Filtereinsatz (97) und Filterverschluss (98) verbindet. Durch diese Verbindung wird ein unbeabsichtigtes Lösen verhindert und der Verbund von Filtereinsatz (97), Filterverschluss (98) und der darin enthaltene Getränkegrundstoff (7), zusammen die Filtereinheit (103), kann als ganzes hantiert werden.

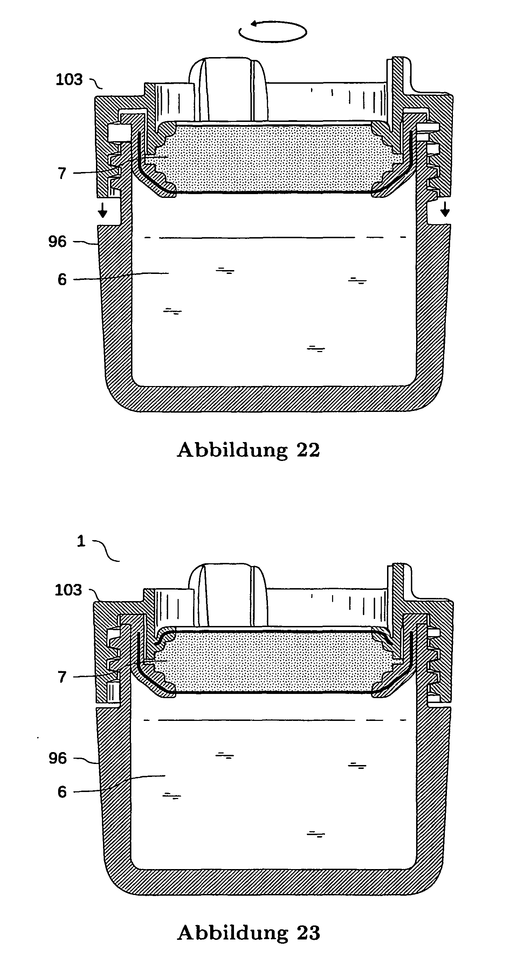

### (h) Aufsetzen der Filtereinheit (103) auf den befüllten Braubehälter (96) (Abbildung 22)

### (i) Festdrehen, sodass die Braueinheit (1) betriebsbereit ist (Abbildung 23)

Die Filtereinheit (103) wird festgedreht, wodurch zum einen der Getränkegrundstoff (7) angemessen verdichtet, bzw. getampert wird und zum anderen die Dichtung des Getränkebereiters festgezogen wird, sodass der Braubehälter (96) mit der Filtereinheit (103) druckdicht verschlossen ist. Die Braueinheit (1) ist nun vollständig für den Brauvorgang vorbereitet.

### (j) Umdrehen der Braueinheit (1)

Beim gezeigten Getränkebereiter wird die Braueinheit (1) kopfüber zusammengesetzt und muss zur Verwendung umgedreht werden.

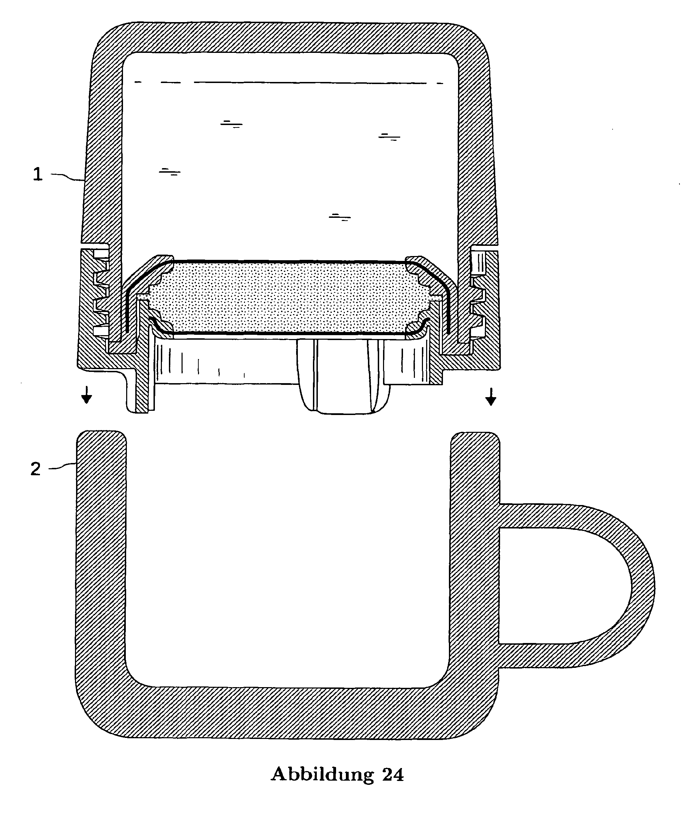

### (k) Aufsetzen der Braueinheit (1) auf den Auffangbehälter (2) (Abbildung 24)

Die Braueinheit (1) wird zuletzt noch korrekt mit dem Auffangbehälter (2) verbunden, falls dieser nicht schon in einem vorherigen Schritt zusammen mit einer anderen Vorrichtung montiert wurde.

Nach Abschluss des Befüllverfahrens kann mit der dem Getränkebereiter gehörigen Zubereitung fortgeschritten werden.

Bei der Verwendung eins Pads oder einer Kapsel wird dieses Verfahren angepasst. Die Schritte (a) bis (e) werden dann durch die folgenden Schritte ersetzt:

### (l) Absetzen des Filtereinsatzes (97) auf eine Ablage

Der Filtereinsatz (97) wird leer mit der Öffnung nach oben auf eine Ablage (208) gelegt.

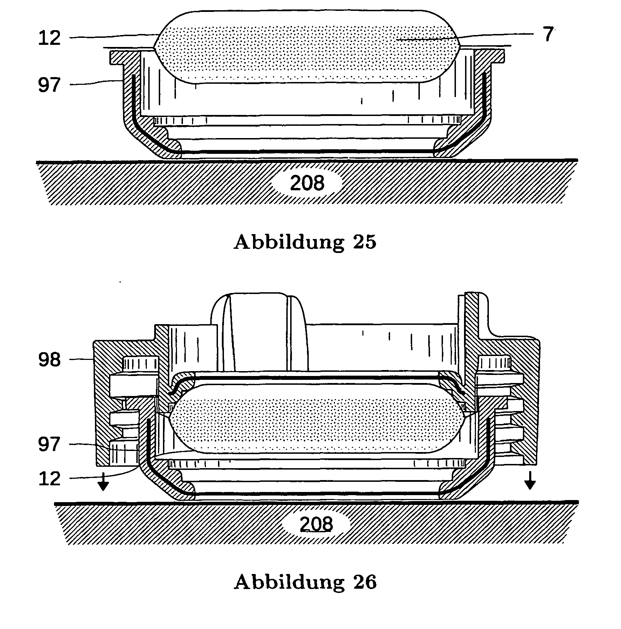

### (m) auflegen des Pads (Abbildung 25)

Das Pad (12) oder die Kapsel wird lose auf den Filtereinsatz (97) gelegt.

Nach Schritt (m) wird mit Schritt (f) fortgefahren, wobei je nach Ausgestaltung des verwendeten Pads, Kapsel oder Getränkebereiters Änderungen in den inneren Vorgängen erforderlich sind, wie z. B. das Anstechen der Kapsel. Das Verfahren für den Gebraucher bleibt jedoch gleich.

### (g) Überstülpen des Filterverschlusses (98) über den befüllten Filtereinsatz (97) (Abbildung 26)

Das Überstülpen des Filterverschlusses zentriert, bzw. positioniert das Pad (12) oder die Kapsel dem weiteren Verfahren angemessen. Ebenso sorgt dieser Schritt für die richtige Ausrichtung von z. B. einem abstehenden Papierfilterrand, wie er bei Pads (12) üblich ist. In diesem Beispiel wird dieser in den Zwischenspalt zwischen Filtereinsatz (97) und dem Ring (29) des Filterverschlusses (98) gefaltet. Ebenso ist dies der früheste Zeitpunkt, an dem im Verschluss (98) oder im Filtereinsatz (97) befindliche Öffnungsvorrichtungen die Kapsel oder das Pad (12) öffnen oder beginnen zu öffnen.

### (j) Festdrehen, sodass die Braueinheit (1) entsteht.

Spätestens nun ist das Pad (12) oder die Kapsel vollständig geöffnet. Ebenso wurde das verwendete Pad (12) in die zum Brauen erforderlichen Form gedrückt und/oder getampert.

## Patentansprüche

1. Vorrichtung zur Zubereitung von Getränken (8) aus einem Getränkegrundstoff (7) und einer Brauflüssigkeit (6) mithilfe elektromagnetischer Strahlung, mit einem Braubehälter (3, 96) und einer Filtereinheit (88, 103) zur Befüllung mit dem Getränkegrundstoff (7), wobei die Filtereinheit (88, 103) sich aus einem Filtereinsatz (4, 97, 155) und einem Filterverschluss (5, 98, 150) zusammensetzt und die Filtereinheit (88, 103) fest mit dem Braubehälter verbunden wird, **dadurch gekennzeichnet, dass** der Filtereinsatz (4, 97, 155) alle Dichtungen enthält, die für die druckdichte Verbindung von Filtereinsatz (4, 97, 155) und Braubehälter (3, 96) sowie von Filtereinsatz (4, 97, 155) und Filterverschluss (5, 98, 150) vonnöten sind.

2. Vorrichtung nach Anspruch 1, **dadurch gekennzeichnet, dass** die Dichtungen (63, 64, 105, 106) aus separaten oder angespritzen O-Ringen bestehen.

3. Vorrichtung nach einem der Ansprüche 1 oder 2, **dadurch gekennzeichnet, dass** der Filtereinsatz (4, 97, 155) aus einem Filter (22, 111) und einem tragenden Ring (21, 116) aus einem elastischen Material besteht.

4. Vorrichtung nach einem der Ansprüche 1 bis 3, **dadurch gekennzeichnet, dass** der Filtereinsatz gesamtheitlich aus einem elastischen Material gefertigt ist.

5. Vorrichtung nach einem der Ansprüche 3 oder 4, **dadurch gekennzeichnet, dass** der Filtereinsatz (97, 155) einen Flansch (99) aufweist, der zwischen dem Braubehälter (96) und dem Filterverschluss (98, 150) angeordnet ist.

6. Vorrichtung nach Anspruch 1, **dadurch gekennzeichnet, dass** der Filtereinsatz (97) einen Federmechanismus zum Weiten der vom Filtereinsatz (97) und Filterverschluss (98) gebildeten Braukammer (65) enthält.

7. Vorrichtung nach Ansprüchen 6 und 3 oder 6 und 4, **dadurch gekennzeichnet, dass** der Filtereinsatz (155) mit Streckrippen (156) versehen ist.

8. Vorrichtung nach einem oder mehreren der Ansprüche 1 bis 7, **dadurch gekennzeichnet, dass** der Filterverschluss (5, 98, 150) und/oder Filtereinsatz (4, 97, 155) mit Noppen (43) versehen sind, sodass sie lösbar aneinander festklemmen.

## Claims

1. Device for preparing drinks (8) from a basic drink compound (7) and a brewing liquid (6) by means of electromagnetic radiation, with a brewing container (3, 96) and a filter unit (88, 103) for filling with the basic drink compound (7), wherein the filter unit (88, 103) is composed from a filter inset (4, 97, 155) and a filter closure (5, 98, 150) and wherein the filter unit (88, 103) is fixedly connected with the brewing container, **characterized in that** the filter inset (4, 97, 155) contains all seals, necessary for a pressure tight connection of filter inset (4, 97, 155) and brewing container (3, 96) as well as filter inset (4, 97, 155) and filter closure (5, 98, 150).

2. Device according to claim 1, **characterized in that** the seals (63, 64, 105, 106) consist in separate sole injected O-rings.

3. Device according to any of claims 1 or 2, **characterized in that** the filter inset (4, 97, 155) consists in a filter (22, 111) and a supporting ring (21, 116) made from an elastic material.

4. Device according to any of claims 1 to 3, **characterized in that** the filter inset as a whole is made from an elastic material.

5. Device according to any of claims 3 or 4, **characterized in that** the filter inset (97, 155) is provided with a flange (99), positioned between the brewing container (96) and the filter closure (98, 150).

6. Device according to claim 1, **characterized in that** the filter inset (97) contains a spring mechanism for widening the brewing chamber (65) formed by the filter inset (97) and the filter closure (98).

7. Device according to claims 6 and 3 or 6 and 4, **characterized in that** the filter inset (155) is provided with stretching ribs (156).

8. Device according to one or several of claims I to 7, **characterized in that** the filter closure (5, 98, 150) and/or the filter inset (4, 97, 155) is provided with burlings (43), in order to make them releasable stick to each other.

## Revendications

1. Dispositif de préparation de boissons (8) à partir d'un composé de base de boisson (7) et d'un liquide de brassage (6), au moyen de radiation électromagnétique, avec un contenant de brassage (3, 96) et une unité de filtre (88, 103) pour remplissage avec le composé de base de boisson (7), dans lequel l'unité de filtre (88, 103) comprend un insert de filtre (4, 97, 155) et un élément de fermeture de filtre (5, 98, 150), l'unité de filtre (88, 103) étant reliée fixement au contenant de brassage, **caractérisé en ce que** l'insert de filtre (4, 97, 155) comprend tous les joints qui sont nécessaires pour une liaison étanche à la pression de l'insert de filtre (4, 97, 155) et du contenant de brassage (3, 96) ainsi que de l'insert de filtre (4, 97, 155) et de l'élément de fermeture de filtre (5, 98, 150).

2. Dispositif selon la revendication 1, **caractérisé en ce que** les joints (63, 64, 105, 106) comprennent des joints toriques séparés ou injectés.

3. Dispositif selon l'une des revendications 1 ou 2, **caractérisé en ce que** l'insert de filtre (4, 97, 155) comprend un filtre (22, 111) et un anneau porteur (21, 116) en matériau élastique.

4. Dispositif selon l'une des revendications 1 à 3, **caractérisé en ce que** l'insert de filtre est formé dans son ensemble d'un matériau élastique.

5. Dispositif selon l'une des revendications 3 ou 4, **caractérisé en ce que** l'insert de filtre (97, 155) comprend un épaulement (99), positionné entre le contenant de brassage (96) et l'élément de fermeture de filtre (98, 150).

6. Dispositif selon la revendication 1, **caractérisé en ce que** l'insert de filtre (97) comprend un mécanisme à ressort pour élargir la chambre de brassage (65) formée par l'insert de filtre (97) et l'élément de fermeture de filtre (98).

7. Dispositif selon la revendication 6 et 3 ou 6 et 4, **caractérisé en ce que** l'insert de filtre (155) est prévu avec des nervures d'étirement (156).

8. Dispositif selon l'une des revendications 1 à 7, **caractérisé en ce que** l'élément de fermeture de filtre (5, 98, 150) et/ou l'insert de filtre (4, 97, 155) est/sont prévu(s) avec des boucles (43) afin de pouvoir les attacher l'un l'autre de manière amovible.
